# EUROPEAN PATENT SPECIFICATION

(11) **EP 1 414 292 B1**
(45) Date of publication and mention of the grant of the patent: **13.05.2009**
(21) Application number: 02755375.9
(22) Date of filing: 02.07.2002
(51) Int. Cl.: A01K 47/02

(54) **BEE HIVE AND METHOD FOR PARASITE CONTROL OF BEES AND BEE HIVES**
BIENENSTOCK UND VERFAHREN ZUR PARASITENKONTROLLE DER BIENEN UND DES BIENENSTOCKS
RUCHE D'ABEILLES ET PROCEDE DE LUTTE CONTRE LES PARASITES DES ABEILLES ET DES RUCHES D'ABEILLES

(30) Priority: 20.07.2001 HU 0103034
(43) Date of publication of application: 06.05.2004
(73) Proprietor: Kónya, Lajos, 9153 Öttevény (HU)
(72) Inventor: Kónya, Lajos, 9153 Öttevény (HU)
(74) Representative: Kiraly, György
(86) International application number: PCT/HU2002/000061
(87) International publication number: WO 2003/007704

(56) References cited:
- FR-A- 2 705 528
- GB-A- 586 654

## Description

The invention relates to a bee hive comprising at least a hatching area called nest having an element for example frame(s) provided with wax comb foundation suitable for laying eggs, further the invention relates to a method for parasite control of bees and bee hives. Nowadays the known bee species are hosts to the following six mite species: family Varriodae: Varroa jacobsoni, V. underwoodi, Euvarroa sinhai, V. Wongsirii, family Laelapidae: Tropilaelaps clareae, T. koenigerum. Only Apis mellifera has a life form that makes spread of both Varroa jacobsoni and Tropilaelaps clareae possible throughout its colonies. Bee species living in the wild are infested with only one or the other. V underwoodi from genus Varroa have a strong preference for male (drone) cells while V jacobsoni evolves both in drone cells and worker cells. This characteristic and the remarkable denseness of European bee colonies made rapid spread of Asian bee mites possible. Varroa jacobsoni is a parasite which typically lives off bees. (Bee-keeping 10/1997.pp.13)

Varroa jacobsoni is a very dangerous parasite that sucks the blood of bees. If it is not treated properly it will destroy the colony in 3-4 years. However, by regular medicinal treatment productiveness of colonies can be maintained.

Female mites enter a brood cell for reproducing before the cell is capped. The female mite lays 3-7 eggs on a larva. The hatching mite begins feeding on the blood of the larva, at this time it is white and has six legs. When developed, its colour is shiny reddish-brown and has eight legs that project from under its shell. Crosswise, mites have an oval shape, their backs are slightly bulging. They are 1.5 mm in length, their oral aperture is adapted for sting and intake of blood by sucking. The mites evolved in the capped cells will mate still in the cell. Male mites will die after mating. Mated female mites emerge from the cell as they cling to the matured bee. They suck the blood of the bee, then again hide themselves in a brood cell to oviposit.

Mites evolving during the autumn (the last) brood, will cling to bees and begin laying eggs only at the end of winter or early spring, that means they survive the winter on bees. Infestation will recur because of hatching mites. Unfortunately, in these days every colony of bees is infested with mites to a lesser or greater extent.

Varrescens smoker works well for extermination of varroa mites. Its active agent is called Amitraz. Previously used Swiss-made Folbex is good for destroying trachea mites but unfortunately it did not prove to be good for killing varroa mites. The most modern medication is Apistan which must be hung in the nest of the bee colony between honeycombs, this sheet continuously kills the again and again hatching mites.

Varroa mites preferably choose male brood cells because male brood cells are capped for 15 days, so there is more time for development of viable mites than in worker brood cells which are capped for 12 days. In this case bee breeders may reduce the amount of mites by cutting out or breaking out the male brood comb after the cells built at the bottom of the builder frame or feed frame are capped. By doing this, spread of mites in bee colonies can be decreased to a great extent. Mites will soon die without bees, in this way empty honeycombs and bee hives will not be infected if no bees are kept in them for a few days before using them. This few days' pause is needed to make it sure that even fallen mites would starve to death. In an apiculture infested with mites bee colonies should be treated with Varrescens smoker at least four times a year. The number of treatments also depends on the degree of re-infection. In our country many of the bee colonies were destroyed by varroa mites in autumn 1987, probably because of ineffectiveness of smokers or because of smokers not having sufficient active agent. For this reason newer types of insecticide were used to prevent bee colonies from mites more effectively.

These insecticides were the following: Antivar, Folbex VA, Apistan, Milben Platten, Perizin and also Varrescens.

Varroa acariasis is an illness of larvae evolving in brood cells, since it tortures developing bees, thus hatched bees are incapable of living. Bees infected with mites seem healthy, but they are unable to fly and they die crawling on the ground.

Based on the treatise titled Reproduction of Varroa Mites in capped brood frames written by Dr G. Donze, Dr P. Fluri and A. Imdorf (issued in Die Biene, 1998/1, Switzerland) the following can be established:
1. Female mites are able to live not only in brood combs but also on developed bees. Clinging to their backs they stay on bees leaving the cells. Unfortunately this assures spread of mites in other bee colonies, because drones have free access to foreign hives, too.
2. Reproduction of mites can happen exclusively in capped brood combs. Female varroa mites hide themselves in a brood cell and can get out of the gluey royal jelly by the help of a bee. After the cells are capped, they lay 5-6 eggs on the wall of the cell near the top. The first egg is laid about 70 hours after the cell is capped and a new egg is laid approximately every 30th hour. The eggs are relatively large, producing of them demands much energy. Thus, oviposition starts on the third day after the cell is capped and continues up to the ninth-tenth day.
3. Behaviour of mites can be featured as follows: it glues its faeces to the upper wall of the cell, makes a pile on one-third of the rear part of it, and spends 90% of its life on top of the pile (upside down). After laying the eggs the mite leaves its residence only in order to feed from the hole previously made in the abdomen of the larva. Haemolymph (blood) of the larva serves as food. The mother mite moves very little in order not to sweep away the eggs with its legs. The eggs of the mite are positioned on a certain part of the cell wall, this part almost 100% is the top front part.
4. The eggs hatch after about 30 hours, hanging on the mother's leg. The first egg results in a male, the others result in females. A male mite does not have a suctorial mouth, it does not eat, its task is to fertilise females. The male re-mates with the first sister until the second matures and so it continues. Worker bees hatch out on the 13th day, drones hatch out on the 16th day after capping the cells. During this time not all female mites become fertile.
5. Mites take bearings by the help of gravitation. When the bee larva develops into pupa - as this process is accompanied with much movement - mites are often brushed off the faeces, but they immediately return to their residence which is their orienting point. Following larva transformation into pupa, mother mite descends from the faecal pile again and perforates the new coat of the pupa to ensure the possibility for feeding. Young mites also stay near the residence and climb down for food from there.

The mite Varroa jacobsoni and its development is described in journal "Trends in Ecology and Evolution" in the article titled "Varroa jacobsoni, a new parasite of western honeybees" (by Benjamin P. Oldroyd, TREE vol. 14. pp. 312-315, 08th August 1999). Illustration shown on page 313 demonstrates how infection develops during development of bees.

Patent application US 4319371 describes a nest or hive for bee culture having spirally wound alternate layers of flat and corrugated materials respectively and contained within a predator and parasite resistant holder. The nest of this type is impenetrable to predators and parasites.

Patent application DE 19831912 describes a new method for destroying bee parasites comprising of thermostatically controlled heated box, accommodating a hive inhabited by bees for certain period. In this method the complete bee hive inhabited by a colony of bees is placed in a heated box controlled by a thermostat for a period of three hours. This method ensures that not only the mites clinging to the bee's body, but also the mites in parts of the hive or inside the brood cells are killed. An opening positioned at the bottom facilitates ventilation.

Patent application WO 0065907 describes a method for reinforcing the bee's natural defences against parasitic diseases, in particular against attacks from varroa mites. It enables to compensate the deficiencies occurring during the bee's growth period. For that purpose, elements essential for the bee are restored, for example essential minerals to the surroundings of the hive, where the bees forage flowers for nectar, by enriching or restoring the surrounding grounds with fresh water diatoms.

The aforementioned patent applications do not provide for sufficient defence against varroa jacobsoni.

The present invention is based on experiments and on the results of research previously described.

The present invention is an improved form of our application No. P 00 00043, in which the inventors have realized that if the cell is rotated by 180° around a horizontal axis, that is the up and down position is changed periodically, then on the one hand the bee pupa and mother mites respectively, as a result of rotating, sweep off the eggs from the wall of the cell, on the other hand the mites lose their sense of direction, therefore they can not continue their life according to their genetic program. The main purpose of the time they spend in the cell is multiplication. Due to the short time available, any kind of disturbance results in failure of multiplication. Such disturbance can be achieved by making obtaining food difficult for them as well as by preventing the young mites from mating. An other fact that worsens the chance of reproduction of mites is that if the mother mite dies before the larva develops or becomes weak because obtaining food indispensable for oviposition is difficult for it, then the young mites will also die since they are not strong enough for getting their food, that is, they are not strong enough to perforate the abdomen of the larva. Further, they may get stuck in the royal jelly. Naturally, mites living in the hive at the time of rotation are at different stage of growth. There can be some which have just hid themselves in the royal jelly and have not yet formed their living space, so they can easily accommodate themselves to changed circumstances, but multiplication of the others, because of the above mentioned reasons becomes difficult, and they may die. In case the mother mite realises the changed position resulting from rotation and crawls above the pupa, the reproductive process will strop. By repeating rotating the number of surviving mites can be further decreased and even in case of infection this number will not exceed a critical value which would result in prostration or extermination of a bee colony. By repeating rotations varroa mites can be entirely exterminated. Experience shows that periodically rotating the hive by 180° around a horizontal axis has only a slight effect on the life of bees and does not influence their production of honey. According to this solution the whole hive is rotated at given intervals. However, this required moving of too big mass. Further, because of rotating, at every turn, bees rebuilt the honeycomb placed in the honey-chamber, since the wall of the honeycomb is slightly inclined in upward direction in order to prevent outflow of honey from the honeycomb.

The aim of the present invention is to provide a hive which can be used more effectively and advantageously in the method previously described for prevention of acariasis and to provide an improved method for the same.

In the present invention we have realized that it is sufficient to turn only the brood frames being in the nest or in the hatching area at given intervals in order to reduce infestation of a bee colony and it is unnecessary to turn over the whole hive. In this way bees do not have to rebuild the honeycombs being in the honey chamber after every turn, and also the mother grid can be omitted since the queen bee starts laying the eggs into the honeycomb established in the frames of the hatching area from the bottom of the hive and proceeds towards the top. The queen bee always strives towards the bottom part of the hive, so when not rotating the whole hive, the use of a mother grid becomes unnecessary. In the present design the frames in the hatching area are being rotated and this rotation does not disturb honey-making of bees. When only the brood combs are turned over then intervening in the way of life of bees is of the slightest degree. Consequently, turning over of the honeycombs can be performed at more frequent intervals which ensures more secure protection against reproduction or survival of mites.

In one aspect the present invention provides a hive comprising at least a hatching area called nest, in which an element for example at least one frame provided with wax comb foundation suitable for laying eggs is positioned. The at least one frame is a rotatable frame which is installed in the nest perpendicular to the ground, and it is coupled to the hive by a rotating mechanism having a shaft perpendicular to the plane of the at least one rotatable frame i.e. parallel with the ground.

The hive is provided with a honey chamber and a roof and advantageously an outlet with a lending board is formed on one side of the hive.

Preferably, the at least one rotatable frame is shaped as a body of revolution which is included in a cylindrical hoop.

In order to achieve better utilization of the space in the nest a honey frame is placed at least partially around the at least one rotatable frame.

Advantageously, in order to make easier of moving of the at least one frame the rotating mechanism is provided with an operating unit brought out of the hive, and an operating mechanism for example a motor controlled by timing electronics is coupled to the operating unit of the rotating mechanism.

In another aspect the present invention provides a method for parasite control of bees and bee hives. In the method according to the present invention the frames which are positioned in the nest part of the hive, are rotated at an angle of 180° in a direction perpendicular to their plane, around a shaft which is parallel with the ground, and said rotation is performed every 24-72 hours.

A detailed description of the invention will be given with reference to the accompanying drawings in which:
Figure 1 is a perspective view of the hive whose side walls have been partially removed.
Figure 2 shows the hive of Figure 1 from another view with the side wall partially removed.
Figure 3 schematically shows the positioning of the frames being in the honey chamber and in the nest.
Figure 4 schematically shows the positioning of the frame being in the honey chamber and in the nest, wherein a honey frame is placed above the rotatable frame.
Figure 5 shows the nest viewed from above, the rotatable frames are at one of their extreme positions.
Figure 6 shows the nest viewed from above, wherein the rotatable frames are shown in a position taken up during rotation.
Figure 7 is a cross-section of figure 5 taken along line A-A.
Figure 8 shows the rotating mechanism, wherein an operating mechanism (electromotor) having cog-wheel connection is used.
Figure 9 shows the rotating mechanism viewed from above.
Figures 10, 11 and 12 show examples of possible formation of the hinge.
Figure 13 is an enlarged view of the circled part of Figure 7.

In its base form a hive consists of a nest and a honey chamber. Generally, the nest is disposed beneath the honey chamber, in case of horizontally positioned hives it is disposed next to the honey chamber. In the latter case (horizontally positioned hive) it may be advantageous to separate the nest and the honey chamber from each other by a so called mother grid in order that the mother bee will exclusively lay, the eggs in the frames being in the nest. The holes or openings of the mother grid are of very small size, so it is impossible for the mother bee to get through it.

The present invention relates exclusively to the nest and to the frames being in the nest, consequently it can be utilized in any kind of (horizontally or vertically positioned) hives having a nest provided with frames. Naturally, when more than one nest is provided in the hive, the method according to the present invention is applicable to each of the nests respectively. In the following an advantageous embodiment of a nest being in a vertically positioned hive is described, but as previously mentioned the present embodiment is applicable to any kind of hives having a nest.

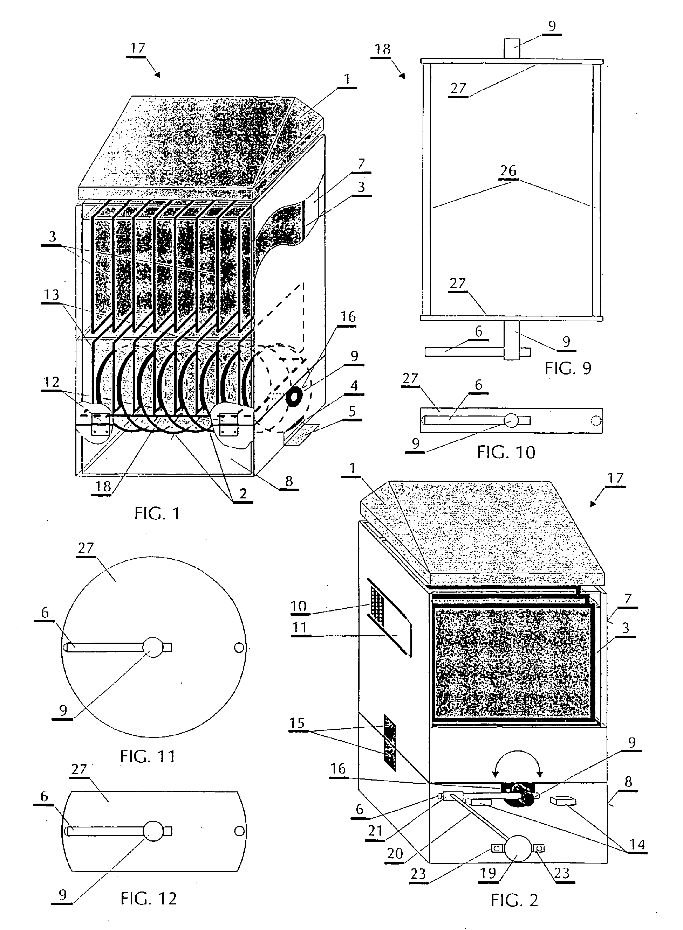

In Figures 1 and 2, a simple, commonly used, vertically positioned hive 17 is shown in which the present invention can be utilized. Roof 1 protects hive 17 against rain. Roof 1 is mounted on hive 17 in a known way, it can be closed and opened up or it is fixable and removable in order to protect frames 3 against slipping out when hive 17 is opened up between honey chamber 7 and nest 8 when access to nest 8 is needed. Opening and closing elements of roof 1 are well known and are not shown in the drawings.

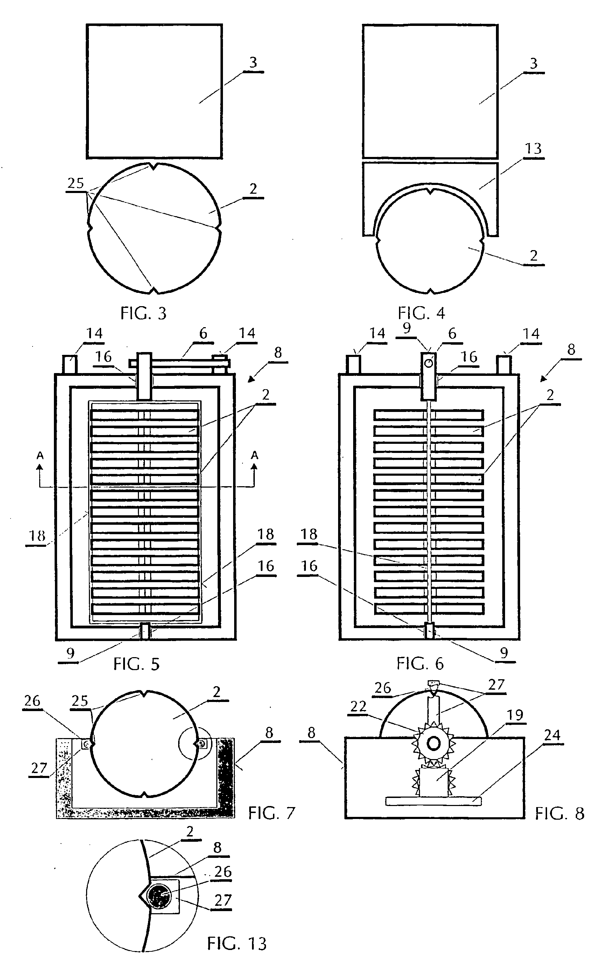

Joint hinge 12 is used for opening up hive 17 and joining element 15 is used for fixing when hive 17 is in closed position. The joining element can be for example an easily releasable bolted frog or fish-plate joint. That part of the hive 17 which holds frames 3 generally can be called drawer and it serves as honey chamber 7. Nest 8 in which rotatable frames 2 are positioned is disposed beneath honey chamber 7. Preferably, the rotatable frames 2 are cylindrical and they have a cross-section of a circle, therefore the space between honey chamber 7 and rotatable frames 2 can be utilized by installing honey frame 13 (schematically shown as the middle frame in Figure 4). Of course, the shape of the rotatable frame 2 is indifferent, but handling of the frames having a cylindrical shaping is easier. Rotatable frames 2 are mounted in a rotating mechanism 18. A possible embodiment is shown in section in Figure 7. Implementation of this is simple for those skilled in the art. For example in Figure 9 rotating mechanism 18 consists of two rest bars gripped between two hinges 27 (the exemplary formation of the hinge is shown in Figures 10, 11 and 12), and equally disposed along the circumference of the rotatable frames 2 recesses 25 are formed (see the lowest frames of Figures 3 and 4). The number of these recesses is advantageously four, at least two. The rest bars 26 are spaced from each other in a distance, so when rotatable frames 2 are positioned in between rest bars 26 and later turned perpendicularly to rest bars 26 then recess 25 fits onto rest bars 26 and prevents rotatable frames 2 from slipping out of rotating mechanism 18 (Figures 5, 6, 7 and 13). When making the edge of rotatable frames 2 elastic, then it is also possible to press rotatable frames 2 in between rest bars 26 at the cost of a slight deformation of this edge. Recess 25 of the partly pressed rotatable frames 2 fits onto rest bars 26, when rotatable frame 2 regains its shape. Two shafts 9 are fixed to hinges 27 which hold ends of rest bars 26 together. Examples of formation of hinges 27 are shown in figures 10-12, but other formations can be considered, too. Rotating mechanism 18 is positioned in a shaft-sleeve 16 formed in the edge of nest 8 (Figures 5 and 6). An operating unit 6 for example a simple rod is coupled to one of the shafts 9 in a known way. For example operating unit 6 is mounted in a bore-hole bored perpendicularly to the axis of rotation of shaft 9. Since in the method according to the invention rotatable frames 2 must be turned over by 180° at fixed intervals, rotating can be performed even manually. After turning over of the rotatable frames 2 by 180°, operating unit 6 is knocked against one of the arresters 14. Turning over can be automatized. In this case an operating mechanism 19 is coupled to shaft 9. These embodiments are well known in practice. For example, in the embodiment according to Figure 2 a switch unit 21 advantageously made of a tube or a ring is positioned around operating unit 6. Switch unit 21 can freely move axially on operating unit 6. One end of a driving rod 20 is coupled to switch unit 21, in such a way that driving rod 20 - for example by insertion of a shaft - is able to turn away relative to switch unit 21. The other end of driving rod 20 is coupled to a motor used for windscreen wipers. This motor is mounted on the outer side of nest 8 with fasteners 23. The advantage of this embodiment is that turning over of rotatable frames 2 at given intervals can be automatized in an area where electric network is not established. This kind of motor can be bought ready to use, can be operated with a battery, and turning over of rotatable frames 2 can be controlled easily since the motor controls periodic motion. In addition, couplings provided with clock mechanism are available which can be set to very short switching time or even to a period of several weeks. It may be suitable for switching a control circuit which makes the motor perform a turn of 180°. Operating mechanism 19 can be an electromotor (Figure 8). In this case the electromotor is mounted on a supporting element 24, and engaging cog-wheels 22 are mounted on shaft 9 and on the shaft of the operating mechanism 19 respectively. Control of electromotors is not a problem for those skilled in the art. Naturally, it is preferable to provide operating mechanism 19 with limit switches in case of any kind of electric control. Although not shown in the drawings, operating mechanism 19 can be installed inside hive 17, too, for example in the free space beneath rotatable frames 2 in nest 8. In this case operating unit 6 is not brought out from hive 17 either. In this way the whole operating arrangement can be protected from harmful effects of weather, but inside the hive 17 it must be protected against honey made by bees and against propolis. Lending board 5 and outlet 4 serves for bees' going in and out. On the front side of honey chamber 7 ventilator 10 and cover plate 11 is provided for control of ventilation.

Hive 17 according to the invention can be used similarly to conventional vertically or horizontally positioned hives with the difference that when applying the method, rotatable frames 2 are turned over by 180° at given intervals by means of rotating mechanism 18. Access to nest 8 can be performed by opening honey chamber 7 with the help of joint hinge 12. Rotatable frames 2 can be lifted out of nest 8 or can be inserted in, either by turning rotatable frames 2 being in between rest bars 26 around a vertical axis of symmetry or by pulling out/pressing in the frames while making use of their elasticity. Frames 3 can be lifted out of honey chamber 7 after removal or opening of roof 1. The cyclical period for turning rotatable frames 2 is preferably thirty hours from spring to autumn. Execution of this can be performed by turning over operating unit 6. If it is not done manually, then cyclical period of operating mechanism is set to this value.

When several equally formed hives 17 are closely positioned next to each other then they can be coupled together by a common shaft 9. In this case rotatable frames 2 can be turned over by means of a common operating mechanism 19. Further, hives 17 can be built together in such a way that only a partition wall is formed between the hives. In fact, in this embodiment hive 17 is a large-sized bee hive wherein the inner space is divided vertically, perpendicular to shaft 9. The advantage of this dividing is that handling is easier with these smaller units. The two ends of shaft 9 can be designed in such a way that one end of shaft 9 of one of the hives 17 is coupled to the other end of shaft 9 of another hive 17 and the other end of shaft 9 of the one hive is coupled to operating mechanism 19. In this case it is sufficient to adjust axially the individual hives 17 to each other tightly, and operating mechanism can be coupled to the end of shaft 9 of the outermost hive 17 in a manner similar to coupling of hives 17. In this way any of the hives 17 can be lifted out of the arrangement as well as further hives 17 can be installed in the arrangement depending on the performance of operating mechanism 19. Superficies of one end of shaft 9 can be formed having axially extending ribs and the other end having axially recessed ribs. The end having extending ribs can be inserted into an other shaft 9 having recessed ribs. In an other embodiment a transversal cut (groove) is formed on one end of shaft 9 and a transversal pin is formed on the other end of shaft 9. Hives 17 arranged next to each other as well as embodiments of a common shaft 9 are not shown in the drawings, because it can be easily implemented by those skilled in the art.

As opposed to known hives, the advantage of the hive and method according to the invention is that bees and their hives can be protected against varroa mites without using chemicals, therefore production of bio-honey becomes possible. Design of the hive makes it possible to turn over only the frames being in the nest, which does not disturb bees' collecting of honey since the position of frames being in the honey chamber is not changed. With this design smaller mass is needed to be moved therefore automatization of operation can be performed with less energy and simpler mechanisms. The invention can be implemented simply, at low cost, and application of the method do not require special knowledge.

## Claims

1. Hive comprising at least a hatching area called nest, in which an element with at least one frame provided with wax comb foundation suitable for laying eggs is positioned, wherein said at least one frame is a rotatable frame (2) which is installed in said nest (8) vertically, and it is coupled to the hive (17) by a rotating mechanism (18) having a horizontal shaft (9) perpendicular to the plane of said at least one rotatable frame (2).

2. Hive according to claim 1 wherein said hive (17) is provided with a honey chamber (7) and a roof (1) and advantageously an outlet (4) with a lending board (5) is formed on one side of said hive (17).

3. Hive according to claims 1 or 2 wherein said at least one rotatable frame (2) is shaped as a body of revolution which is included in a cylindrical hoop.

4. Hive according to any one of the claims 1-3 wherein a honey frame (13) is placed in said nest (8) at least partially around said at least one rotatable frame (2).

5. Hive according to any of the claims 1-4 wherein said rotating mechanism (18) is provided with an operating unit (6) which is brought out of the hive (17).

6. Hive according to any one of the claims 1-5 wherein an operating mechanism (19) is coupled to said operating unit (6) of said rotating mechanism (18).

7. Hive according to any one of the claims 1-6 wherein said operating mechanism (19) is a motor controlled by timing electronics

8. Method for parasite control of bees and bee hives wherein frames which are positioned in the nest part of the hive are rotated at an angle of 180° in a direction perpendicular to their plane, around a horizontal shaft, and said rotation is performed every 24-72 hours.

## Patentansprüche

1. Der Bienenstock enthält ein Vermehrungsgebiet, den sogenannten Brutraum, wo ein Element, mindestens ein, für Eiablage geeigneter, mit Wachs bezogenes Rähmchen geordnet ist, **dadurch gekennzeichnet, dass** das mindestens ein Rähmchen ein drehbares Rähmchen (2) ist, welches senkrecht im Brutraum (8) gestellt ist und mit dem Bienenstock (17) gekoppelt ist durch einen Drehmechanismus (18), welcher eine waagerechte Achse besitzt senkrecht auf der Ebene des mindestens einen drehbaren Rähmchen (2).

2. Der Bienenstock nach Anspruch 1, **dadurch gekennzeichnet, dass** der Bienenstock ein Honigraum (7) und ein Deckel (1) aufweist, und vorzugsweise auf einer Seite des Bienenstocks ein Flugbrett (4) ausgebildet ist.

3. Der Bienenstock nach einem der Ansprüche 1 oder 2, **dadurch gekennzeichnet, dass** das mindestens ein drehbares Rähmchen (2) als ein Drehkörper ausgebildet ist, dass sich in einem Trommel befindet.

4. Der Bienenstock nach einem der Ansprüche 1 bis 3, **dadurch gekennzeichnet, dass** im Brutraum ein Honigrahmen (13) geordnet ist umfassend mindestens im Teil das drehbare Rähmchen.

5. Der Bienenstock nach einem der Ansprüche 1 bis 4, **dadurch gekennzeichnet, dass** der Drehmechanismus (18) mit einer Betätigungseinheit (6) ausgestattet ist, die sich außer des Bienenstocks (17) befindet.

6. Der Bienenstock nach einem der Ansprüche 1 bis 5, **dadurch gekennzeichnet, dass** ein Betätigungsmechanismus (19) mit der Betätigungseinheit (6) des Drehmechanismus (18) gekoppelt ist.

7. Der Bienenstock nach einem der Ansprüche 1 bis 6, **dadurch gekennzeichnet, dass** der Betätigungsmechanismus (19) ist ein Motor, welcher durch eine Zeitgeberschaltung betätigt wird.

8. Verfahren zur Kontrolle der Bienen und Bienenstöcke gegen Parasiten, **dadurch gekennzeichnet, dass** Rähmchen, die im Brutraum des Bienenstocks geordnet sind, werden um 180° gedreht in senkrechter Richtung zu ihrer Ebene, um eine waagerechte Achse, und das Drehen wird alle 24 - 72 Stunden ausgeführt.

## Revendications

1. Ruche contenant au moins une espace d'éclosion, nommé nid, où se trouve un élément étant au moins un cadre fourni par cire et apte pour recevoir oeufs, ledit cadre (2) est pourvu pour rotation et, est installé dans ledit nid (8) verticalement et, est couplée avec la ruche via un mécanisme de rotation (18) ayant un axe horizontal qui est perpendiculaire à une surface dudit au moins un cadre (2) à rotation.

2. Ruche suivant la revendication 1, **caractérisée en ce que** la ruche (17) est fournie d'une chambre de miel (7) et d'un toit (1) et, avec préférence, une ouverture (4) avec une planche de vol (5) est formée sur un côté de la ruche (17).

3. Ruche suivant la revendication 1 ou 2, **caractérisée en ce que** dudit au moins un cadre (2) se présente sous forme d'un corps de révolution inclus dans un cerceau cylindrique.

4. Ruche suivant l'une quelconque des revendications 1 à 3, **caractérisée en ce qu'**un cadre de miel (13) est déposé au moins partiellement autour du cadre (2) à rotation dans le nid (8).

5. Ruche suivant l'une quelconque des revendications 1 à 4, **caractérisée en ce que** dudit mécanisme de rotation (18) est muni d'une unité de command (6) se trouvant dehors de la ruche (17).

6. Ruche suivant l'une quelconque des revendications 1 à 5, **caractérisée en ce qu'**un mécanisme de command (19) est couplé avec l'unité de command (6) dudit mécanisme de rotation (18).

7. Ruche suivant l'une quelconque des revendications 1 à 6, **caractérisée en ce que** dudit mécanisme de command (19) se présente sous forme d'un moteur contrôlé par un circuit de minutage.

8. Procédé pour le parasite control des abeilles et des ruches, **caractérisée en ce que** les cadres montés dans la portion nid de la ruche sont pivotés sous un angle de 180° perpendiculaire à leur surface, autour d'un axe horizontal et, la rotation est effectuée chaque 24-72 heurs.
